# EUROPÄISCHE PATENTANMELDUNG

(11) **EP 2 227 933 A1**
(43) Veröffentlichungstag der Anmeldung: **15.09.2010**
(21) Anmeldenummer: 10401029.3
(22) Anmeldetag: 11.03.2010
(51) Int. Cl.: A01C 15/00, A01C 17/00

(54) **Verteilmaschine**

(30) Priorität: 13.03.2009 DE 102009013177
(71) Anmelder: Amazonen-Werke H. Dreyer GmbH & Co. KG, 49205 Hasbergen (DE)
(72) Erfinder: Walter, Achim, 49078 Osnabrück (DE)

(57) **Zusammenfassung**

Verteilmaschine mit Vorratsbehälter (1), in dessen unteren Bereich eine angetriebene Dosier- und/oder Rührvorrichtung angeordnet ist, wobei die Rührwelle (7) über einen eine Pleuelstange (13) aufweisenden Exzenter- und/oder Kurbelantrieb antreibbar ist, wobei die Pleuelstange (13) einen zumindest teilweise elastischen Bereich ausweist, eine verbessert ausgebildete Pleuelstange (13) zu schaffen, ist vorgesehen, dass die Pleuelstange (13) vollständig aus einem elastischen Material, vorzugsweise Kunststoff oder Gummi hergestellt ist.

## Beschreibung

Die Erfindung betrifft eine Verteilmaschine gemäß des Oberbegriffes des Patentanspruches 1.

Eine derartige Verteilmaschine ist beispielsweise durch die DE 195 01 528 bekannt geworden. Diese Verteilmaschine ist als Schleuderdüngerstreuer ausgebildet. Dieser Schleuderdüngerstreuer weist einen Vorratsbehälter auf, in dessen unteren Bereich eine Rührwelle mit Rührelementen angeordnet ist, die über einen Exzenter bzw. Kurbelantrieb in hin- und hergehende Bewegungen versetzt werden kann. Der Exzenterantrieb wird von einem Antrieb angetrieben. Der Antrieb weist eine Exzenterscheibe auf. Auf dieser Exzenterscheibe ist mittels einer Lagerung eine Pleuelstange gelagert. Das andere Ende der Pleuelstange ist mit einem Hebelarm, der an der Rührwelle befestigt ist gelenkig verbunden. Über die Pleuelstange wird die Rührwelle in hin-und hergehende Drehbewegungen oder mittels eines Freilaufes in Rotation versetzt, so dass die Rührelemente bewegt werden. Die Pleuelstange ist zweigeteilt ausgebildet. Die beiden Teile der Pleuelstange sind über einen Gummipuffer miteinander verbunden, so dass die Pleuelstange einen zumindest teilweise elastischen Bereich aufweist. Eine derartige nur teilweise aus einem elastischen Bereich bestehende Pleuelstange ist für den rauen Einsatz in der Landwirtschaft nicht geeignet. Weiterhin reicht die Elastizität dieses kleinen Bereiches der Pleuelstange in vielen Fällen im Hinblick auf Überlastsicherung und dem Stillsetzen des Rührorgans oder der Dosiervorrichtung nicht aus.

Der Erfindung liegt die Aufgabe zugrunde, eine verbessert ausgebildete Pleuelstange zu schaffen.

Diese Aufgabe wird erfindungsgemäß dadurch gelöst, dass die Pleuelstange vollständig aus einem elastischen Material, vorzugsweise Kunststoff oder Gummi hergestellt ist. Infolge dieser Maßnahme ergibt sich eine ausreichend elastische Pleuelstange, so dass sie in geeigneter Weise die Dosier- und Rührvorrichtung sicher antreiben kann. Andererseits aber weist sie ausreichend Reserve für eine Überlastsicherung oder Stillsetzung der Dosier- und Rührvorrichtung auf. Wenn unzerdrückbare Gegenstände die Dosier- und Rührvorrichtung blockieren, so kann die Pleuelstange aufgrund ihrer Elastizität weil sie aus elastischem Material besteht, sich strecken oder durchbiegen. Hierdurch kommt es zu keinen Beschädigungen an der Verteilmaschine und der Pleuelstange sowie dem Antrieb für die Dosier- und Rühreinrichtung.

Um einen guten und sicheren Antrieb der Dosier- und Rührvorrichtung sicherzustellen, ist vorgesehen, dass die Pleuelstange ohne Kröpfung ausgestaltet ist. Hierdurch wird sichergestellt, dass kein vordefinierter Schwachpunkt der Pleuelstange geschaffen wird. Hierdurch ist ein sicherer Antrieb gewährleistet. Die Längenstreckung der Pleuelstange bzw. deren Durchbiegung wird allein aufgrund der Elastizität der Pleuelstangen sichergestellt. Dies ist dadurch möglich, dass die Pleuelstange aufgrund ihrer Materialelastizität in der Länge streckbar und/oder durchbiegbar ausgestaltet ist.

Durch die EP 1 559 305 B1 ist ein Schleuderstreuer bekannt, der ebenfalls eine Pleuelstange mit einem Exzenter und Kurbelantrieb aufweist. Die Pleuelstange ist hier durchgekröpft ausgebildet. Aufgrund der durchgekröpften Ausbildung der Pleuelstange sollen Beschädigungen an dem Antrieb der Dosier- und Rührvorrichtung vermeiden werden. Aus welchem Material die Pleuelstange ausgebildet ist, ist dieser Druckschrift nicht zu entnehmen.

Weitere Einzelheiten der Erfindung sind der Beispielsbeschreibung und den Zeichnungen zu entnehmen.

Hierbei zeigen
- Fig. 1: die als Schleuderdüngerstreuer ausgebildete Verteilmaschine mit sich in Schließstellung befindlicher Schutzeinrichtung in perspektivischer Ansicht schräg von vorne oben und in Teildarstellung,
- Fig. 2: den Schleuderdüngerstreuer gemäß Fig. 1 im Schnitt II - II,
- Fig. 3: die als Schleuderdüngerstreuer ausgebildete Verteilmaschine in perspektivischer Ansicht schräg von vorne oben in Teildarstellung, wobei die in Fahrtrichtung rechte Schutzeinrichtung innerhalb des Vorratsbehälters sich in Öffnungsstellung befindet und
- Fig. 4: den Schleuderdüngerstreuer gemäß Fig. 3 im Schnitt IV - IV.

Die landwirtschaftliche Verteilmaschine ist als Schleuderdüngerstreuer ausgebildet. Sie weist einen Vorratsbehälter 1 auf, der durch ein dachförmiges Miteilteil 2 in zwei trichterförmige Auslaufbereiche 3 aufgeteilt ist. Die trichterförmigen Auslaufbereiche 3 werden durch Dosierelemente abgeschlossen. Unterhalb der Dosierelemente 4 befinden sich rotierend angetriebene Schleuderscheiben 5 mit Wurfschaufeln 6. Im unteren Bereich der Auslauftrichter 3 befindet sich oberhalb der Dosiereinrichtung 4 eine in die Auslauftrichter 3 hineinragende, drehbar gelagerte Rührwelle 7 mit Rührelementen 8. Um die Anordnung der Rührwelle 7 und die darauf angeordneten Rührelemente 8 besser erkennen und darstellen zu können, ist die Vorderwand des Vorratsbehälters 1 nicht dargestellt. Die Rührwelle 7 wird von einer nicht dargestellten motorischen Antriebsvorrichtung über eine Antriebsverbindung 9 angetrieben.

Die Antriebsverbindung 9 ist als Exzenter- und Kurbeltrieb ausgebildet. Auf der Ausgangswelle 10 des Eingangsgetriebes 11 der Antriebsverbindung 9 ist die Exenterscheibe 12 drehfest angeordnet. Auf der Exenterscheibe 12 ist die Pleuelstange 13 des Kurbeltriebes 9 mit ihrem einen Ende gelagert. Das andere Ende der Pleuelstange 13 ist über eine Gelenkverbindung 14 mit dem Hebel 15 des Gehäuses 16 eines auf der Rührwelle 7 angeordneten Freilaufes 17 verbunden. Über den Kurbelantrieb 9 mit dem Freilauf 17 wird die Rührwelle 7 mit den Rührelementen 8 in Rotation versetzt.

Über die Dosierorgane 4 wird das sich im Vorratsbehälter 1 befindliche Material den Schleuderscheiben 5 zugeführt, über welche es von den Wurfschaufeln 6 in Breitverteilung auf der Bodenoberfläche verteilt wird.

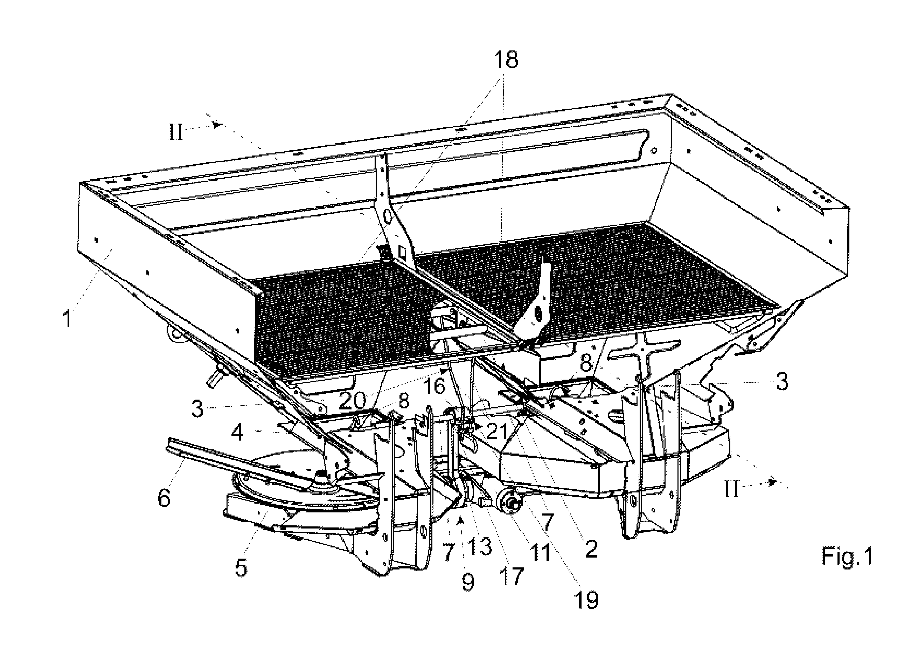

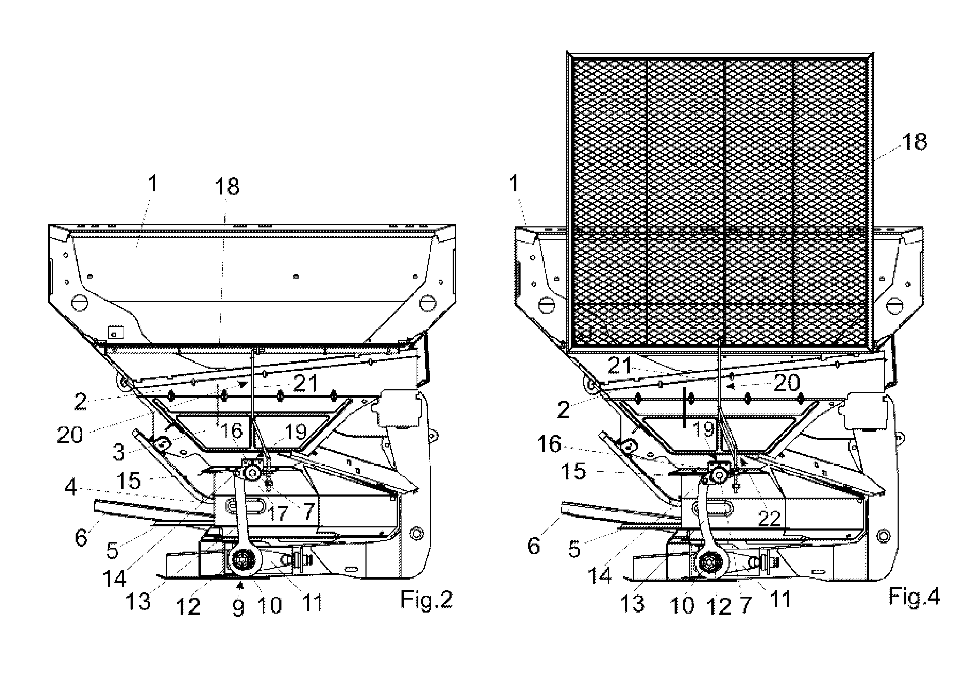

Innerhalb des Vorratsbehälters 1 sind die als Schutzgitter 18 ausgebildeten Schutzeinrichtungen angeordnet, die während des Ausbringvorganges sich in der in Fig. 1 und 2 dargestellten Schutzposition befinden und somit den Zugang von außen zu den sich im unteren Bereich des Vorratsbehälters 1 angeordneten Rühr- 8 und Dosierelemente verhindern. Durch diese Schutzgitter 18 werden also die Rühr- 8 und/oder Dosierelemente abgeschirmt.

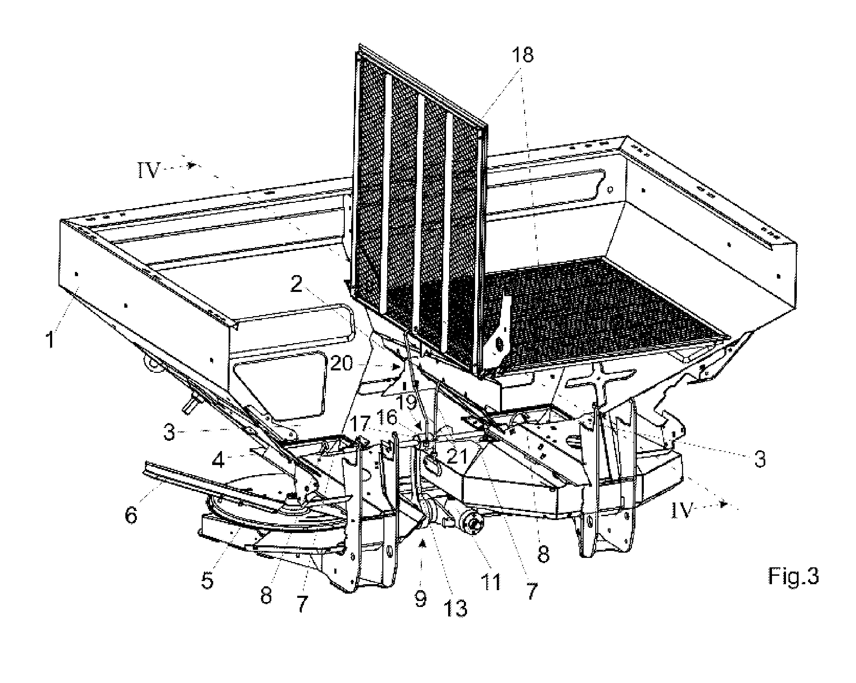

Zwischen dem jeweiligen Schutzgitter 18 und den als Kupplungselement 19 wirksamen Freilauf 17 der Antriebsverbindung 9 sind Mittel 20 angeordnet, die sicherstellen, dass die als Schutzgitter 18 ausgebildete Schutzeinrichtung, wenn sie aus ihrer Schutzposition gemäß Fig. 1 und 2 in die Öffnungsposition gemäß Fig. 3 und 4 bewegt wird, derart auf die Kupplungselemente 19 der Antriebsverbindung 9 einwirkt, dass die Rührwelle 7 und/oder die Rühr- oder Dosierelemente 8 durch trennen der wirksamen Antriebsverbindung von der Antriebsvorrichtung 9 still setzbar sind. Dies wird im Ausführungsbeispiel dadurch erreicht, dass das Kupplungselement 19, das zwischen der Antriebsverbindung 9 und der Rührwelle 7 angeordnet ist, ist als Freilauf 17 ausgebildet ist. An dem Ansatz 20 des Gehäuse 16 des Freilaufes 17 angreifend sind die zwischen den beiden Schutzgittern 11 und dem Freilaufgehäuse 16 angeordneten Verbindungsstangen 21 der Mittel 20 zugeordnet, die bei dem Öffnen eines der Schutzgitter 18 derart auf den Freilauf 17 einwirken, dass der Antrieb zwischen der Antriebsverbindung 9 und der Rührwelle 7 getrennt wird, so dass die Rührwelle 7 stillgesetzt wird.

Die Pleuelstange 13 ist vollständig aus einem elastischen Material, vorzugsweise Kunststoff oder Gummi hergestellt. Weiterhin ist die Pleuelstange 13 ohne Kröpfung ausgestaltet. Durch diese gerade Ausgestaltung der Pleuelstange 13 können sicher ausreichend große Kräfte übertragen werden. Außerdem ist die Pleuelstange 13 aufgrund ihrer Materialelastizität in der Länge streckbar und/oder durchbiegbar ausgestaltet.

Wenn eines oder beide der Schutzgitter 11 in die Fig. 3 und 4 dargestellte Position verschwenkt werden, wird der Antrieb der Rührwelle 7 abgeschaltet. Dadurch, dass hierdurch das Freilaufgehäuse 16 in Pfeilrichtung 22 verschwenkt wird, wird der Abstand zwischen der Exenterscheibe 12 und dem Hebel 15 des Freilaufgehäuses 16 verkürzt. Aufgrund der elastischen Ausgestaltung der Pleuelstange 13, sie ist aus elastischem Material, vorzugsweise Kunststoff oder Gummi gefertigt, kann die Pleuelstange 13 sich durchbiegen. Durch die Stangen 21 wird das Freilaufgehäuse 16 in der derartigen Position gehalten, dass die Pleuelstange 13 zumindest keine für eine Schaltbewegung des Freilaufes 17 ausreichende Bewegung auf das Freilaufgehäuse 16 übertragen kann.

Wenn unzerdrückbare Gegenstände zwischen den Rührelementen 8 und den Wandungen des Vorratsbehälters 1 gelangen sollten, kommt zum Blockieren der Rührwelle 7. In diesem Fall kann die Pleuelstange 13 sich in der Länge strecken, so dass es zu keiner Beschädigung an den Rühr- und/oder Dosierelementen 4, 7, 8 sowie der Antriebsvorrichtung 9 kommen kann.

## Patentansprüche

1. Verteilmaschine mit Vorratsbehälter, in dessen unteren Bereich eine angetriebene Dosier- und/oder Rührvorrichtung angeordnet ist, wobei die Rührwelle über einen eine Pleuelstange aufweisenden Exzenter- und/oder Kurbelantrieb antreibbar ist, wobei die Pleuelstange einen zumindest teilweise elastischen Bereich ausweist, **dadurch gekennzeichnet, dass** die Pleuelstange ( 13 ) vollständig aus einem elastischen Material, vorzugsweise Kunststoff oder Gummi hergestellt ist.

2. Verteilmaschine nach Anspruch 1, **dadurch gekennzeichnet, dass** die Pleuelstange ( 13 ) ohne Kröpfung ausgestaltet ist.

3. Verteilmaschine nach einem oder mehreren der vorstehenden Ansprüche, **dadurch gekennzeichnet, dass** die Pleuelstange (13) aufgrund ihrer Materialelastizität in der Länge streckbar und/oder durchbiegbar ausgestaltet ist.
